# EUROPÄISCHE PATENTANMELDUNG

(11) **EP 2 728 718 A1**
(43) Veröffentlichungstag der Anmeldung: **07.05.2014**
(21) Anmeldenummer: 12190600.2
(22) Anmeldetag: 30.10.2012
(51) Int. Cl.: H02K 17/16

(54) **Käfigläufer mit deformierbarer Lagerung der Läuferstäbe**

(71) Anmelder: Siemens Aktiengesellschaft, 80333 München (DE)
(72) Erfinder: Brandl, Konrad, 93107 Thalmassing (DE); Fichtner, Siegfried, 90584 Allersberg (DE); Pfaller, Maximilian, 90441 Nürnberg (DE); Piotrowski, Patryk, 90459 Nürnberg (DE); Trepper, André, 91052 Erlangen (DE)

(57) **Zusammenfassung**

Die Erfindung betrifft einen Käfigläufer (3, 43, 83) für eine elektrische Maschine (4, 44, 84) umfassend ein Läuferblechpaket (5, 305, 605, 105), das eine Nut (6, 306, 406, 806) aufweist, ein an einem axialen Ende (7, 11, 61, 62, 81, 85) des Läuferblechpakets (5, 305, 605, 105) angegossener Kurzschlussring (8, 110), der ein erstes Material (108) aufweist, und einen Stab (9, 49, 89), der in der Nut (6, 306, 406, 806) angeordnet ist, wobei der Stab (9, 49, 89) durch eine deformierbare Lagerung (10, 30, 40, 80), die eine Lagerungsvorrichtung (12, 32, 42, 82) aufweist, in der Nut (6, 306, 406, 806) gelagert ist. Desweiteren betrifft die Erfindung ein Läuferblechpaket (5, 305, 605, 105) für einen Käfigläufer (3, 43, 83), wobei das Läuferblechpaket (5, 305, 605, 105) die Nut (6, 306, 406, 806) und die Lagervorrichtung (12, 32, 42, 82) umfasst, eine Elektrische Maschine (4, 44, 84) umfassend einen Käfigläufer (3, 43, 83), ein Verfahren zur Herstellung eines Läuferblechpakets (5, 305, 605, 105), wobei die Lagervorrichtung (12, 32, 42, 82) am Läuferblechpaket (5, 305, 605, 105) erzeugt wird und ein Verfahren zur Herstellung eines Käfigläufers (3, 43, 83), wobei der Stab (9, 49, 89) durch eine deformierbare Lagerung (10, 30, 40, 80), die eine Lagerungsvorrichtung (12, 32, 42, 82) aufweist, in der Nut (6, 306, 406, 806) gelagert wird.

## Beschreibung

Die Erfindung betrifft einen Käfigläufer gemäß dem Oberbegriff des Patentanspruchs 1, eine elektrische Maschine, die den Käfigläufer umfasst und ein Läuferblechpaket für den Käfigläufer. Ferner betrifft die Erfindung ein Verfahren zur Herstellung des Käfigläufers.

Ein derartiger Käfigläufer ist aus der WO 2012/041943 A2 bekannt. Es werden dort zur Verbesserung der Qualität eines Käfigläufers und einer Asynchronmaschine Maßnahmen beschrieben, um die dabei auftretenden Probleme zu überwinden oder zu reduzieren. Es wird dort beschrieben, dass ein Käfigläufer einer Asynchronmaschine einen Stab in einem Läuferblechpaket aufweist, wobei der Stab an einer Kippstelle kippbar ist. Der Stab ist dabei vorteilhaft so kippbar, dass dessen Enden zu einer Achse des Käfigläufers hin gekippt werden können. Im Endbereich des Läuferblechpakets ergibt sich also ein Spalt zum Stab, wobei der Stab eine Biegung in Richtung des Spaltes vollziehen kann. Der Spalt ermöglicht also eine Biegung der Enden der Läuferstäbe zur Achse hin. Dies hat den Vorteil, dass der Stab einer Kraft nachgeben kann, die entsteht, wenn sich bei Erstarrung der Schmelze der Kurzschlussring zusammenzieht und eine Kraft auf den Stab in Richtung der Achse des Käfigläufers ausübt. So wird dem Problem entgegengewirkt, dass sich der elektrische Widerstand zwischen dem Kurzschlussring und dem Stab erhöht, wenn der Stab nicht dem beim Abkühlvorgang schrumpfenden Kurzschlussring folgen kann. Die Verbindungsstelle zwischen Stab und Kurzschlussring ist maßgeblich für die Betriebsdaten des Käfigläufers oder der elektrischen Maschine verantwortlich. Eine Verbesserung dieser führt automatisch zu besseren elektrischen Daten, insbesondere des Wirkungsgrades.

Aufgrund der Bestrebungen, den Energieverbrauch maßgeblich zu reduzieren, ist es von zentraler Bedeutung, einen weiteren technischen Beitrag zu leisten, der alleine, alternativ oder in Kombination mit bekannten Maßnahmen eine elektrische Maschine mit hohem Wirkungsgrad ermöglicht.

Der Erfindung liegt daher die Aufgabe zugrunde, einen Käfigläufer für eine elektrische Maschine mit hohem Wirkungsgrad zur Verfügung zu stellen.

Die Aufgabe wird durch einen Käfigläufer für eine elektrische Maschine mit den Merkmalen des Anspruchs 1 gelöst.

Der erfindungsgemäße Käfigläufer für eine elektrische Maschine umfasst
- ein Läuferblechpaket, das eine Nut aufweist,
- ein an einem axialen Ende des Läuferblechpakets angegossener Kurzschlussring, der ein erstes Material aufweist, und
- einen Stab, der in der Nut angeordnet ist,
wobei der Stab durch eine deformierbare Lagerung, die eine Lagerungsvorrichtung aufweist, in der Nut gelagert ist.

Die Aufgabe wird auch durch ein Läuferblechpaket für einen Käfigläufer mit den Merkmalen nach Anspruch 7 gelöst.

Das erfindungsgemäße Läuferblechpaket ist für einen erfindungsgemäßen Käfigläufer, wobei das Läuferblechpaket die Nut und die Lagerungsvorrichtung umfasst.

Die Aufgabe wird auch durch eine elektrische Maschine nach Anspruch 8 gelöst.

Die erfindungsgemäße elektrische Maschine umfasst einen erfindungsgemäßen Käfigläufer.

Ferner wird die Aufgabe durch ein Verfahren zur Herstellung eines Läuferblechpakets nach Anspruch 9 gelöst.

Bei einem erfindungsgemäßen Verfahren zur Herstellung eines erfindungsgemäßen Läuferblechpakets wird die Lagerungsvorrichtung am Läuferblechpaket erzeugt.

Außerdem wird die Aufgabe durch ein Verfahren zur Herstellung eines Käfigläufers nach Anspruch 10 gelöst.

Bei dem erfindungsgemäßen Verfahren zur Herstellung eines erfindungsgemäßen Käfigläufers wird der Stab durch eine deformierbare Lagerung, die eine Lagerungsvorrichtung aufweist, in der Nut gelagert.

Der erfindungsgemäße Käfigläufer löst die Aufgabe vorteilhaft, indem der Stab durch die deformierbare Lagerung, die die Lagerungsvorrichtung aufweist, in der Nut gelagert ist. So kann der Stab einem Schrumpfen des ersten Materials bei einem Erstarren der Schmelze des ersten Materials nach oder während eines Angießens des Kurzschlussrings vorteilhaft folgen. Hierdurch wird eine vorteilhafte Verbindung zwischen dem Stab und dem angegossenen Kurzschlussring erreicht, die zu einem niedrigen elektrischen Widerstand zwischen dem Stab und dem Kurzschlussring führt und damit zu einem Käfigläufer für eine elektrische Maschine mit einem hohen Wirkungsgrad führt.

Außerdem gibt die deformierbare Lagerung nach einer Deformation durch das Schrumpfen des ersten Materials vorteilhaft Räume in der Nut frei, die der Stab benötigt, um einem Schrumpfen des ersten Materials bei einem Erstarren nach oder während eines Angießens des Kurzschlussrings zu folgen. Unter anderem müssen die Räume in der Nut nur im kleinen Umfang zur Verfügung gestellt werden. Ein damit erreichbarer größerer Querschnitt des Stabes in der Nut und des gegebenfalls in der Nut vorgesehenen ersten Materials führen zu einem niedrigen elektrischen Widerstand. Dies trägt zusätzlich dazu bei, eine elektrische Maschine mit hohem Wirkungsgrad zu erhalten.

Weiterhin wird vorteilhaft eine mechanisch feste Verbindung zwischen dem Stab und dem angegossenen Kurzschlussring erreicht, da der Stab dem Schrumpfen des ersten Materials beim Erstarren der Schmelze entsprechend folgen kann.

Die Deformation der deformierbaren Lagerung ist abhängig von den Kräften, die durch das Erstarren des ersten Materials auf die deformierbare Lagerung wirken. Die deformierbare Lagerung kann vollständig deformiert sein. Die deformierbare Lagerung kann eine Deformation aufweisen, die örtlich begrenzt ist. Die deformierbare Lagerung, insbesondere die Lagerungsvorrichtung kann teilweise deformiert sein.

Wenn die deformierbare Lagerung nur teilweise deformiert ist, so kann auch bei unterschiedlichen Kraftverteilungen der Stab einem Schrumpfen des ersten Materials bei einem Erstarren der Schmelze des ersten Materials nach oder während eines Angießens des Kurzschlussrings vorteilhaft folgen ohne dass der Stab im Nutgrund aufliegt und so nicht mehr folgen kann.

Die Deformation der deformierbaren Lagerung kann eine elastische Deformation sein. So liegt vorteilhaft ein linearer Zusammenhang zwischen der durch das Erstarren der Schmelze wirkenden Kraft und der Strecke vor, die der Stab der erstarrenden Schmelze folgt.

Die Deformation der deformierbaren Lagerung kann eine plastische Deformation sein. So nimmt die deformierbare Lagerung an einer Stelle, an der der Stab auf der deformierbare Lagerung aufliegt, vorteilhaft eine dem Stab angepasste Form an. Dies führt unter anderem vorteilhaft zu einer Führung des Stabes in der deformierbaren Lagerung.

Bei einem erfindungsgemäßen Käfigläufer kann der Stab durch die deformierbare Lagerung in der Nut von einem Nutgrund der Nut entfernt gelagert sein. So ist durch die deformierbare Lagerung, insbesondere durch die Lagerungsvorrichtung, im Wesentlichen eine Gegenkraft festgelegt, die beim Erstarren des ersten Materials der dadurch auf den Stab wirkenden Kraft entgegenwirkt. Die beim Erstarren des ersten Materials auf den Stab wirkende Kraft kann die Lagerungsvorrichtung zumindest teilweise oder aber auch vollständig deformieren.

Ein erfindungsgemäßer Käfigläufer ist für eine elektrische Maschine, in der er bei einem Betrieb der elektrischen Maschine durch ein magnetisches Zusammenwirken zwischen einem Stator der elektrischen Maschine und dem Käfigläufer in Drehung versetzt wird, so dass mechanische in elektrische Energie umgewandelt werden kann. Die elektrische Energie kann an einer Wicklung des Stators durch Anschließen eines elektrischen Verbrauchers entnommen werden. Bei einem Betrieb der elektrischen Maschine kann auch über eine Wicklung des Stators elektrische Energie zugeführt werden, und durch das magnetische Zusammenwirken zwischen Stator und Käfigläufer in mechanische Energie umgewandelt werden. Dabei wird der Käfigläufer in Drehung versetzt und es kann an einer Welle mechanische Energie an einen mechanischen Verbraucher in Form einer Drehbewegung abgegeben werden.

Für die Drehung des Käfigläufers um die Drehachse weist der Käfigläufer eine Welle auf, die sich entlang der Drehachse erstreckt und an der das Läuferblechpaket befestigt ist. Das Läuferblechpaket umfasst Bleche, die von einem axialen Ende des Läuferblechpakets zu einem weiteren axialen Ende des Läuferblechpakets geschichtet angeordnet sind. Die Bleche weisen für eine Aufnahme des Stabes Öffnungen auf, die die Nut bilden. Für das magnetische Zusammenwirken des Käfigläufers mit dem Stator weist der Käfigläufer eine Wicklung auf. Die Wicklung umfasst den Stab und den angegossenen Kurzschlussring, der die Wicklung kurzschließt. Je niedriger der elektrische Widerstand, insbesondere der im Betrieb der elektrischen Maschine wirksame Widerstand, der Wicklung des Käfigläufers ist, umso höher ist der Wirkungsgrad der bei einer elektrischen Maschine mit dem Käfigläufer erreicht wird. Um eine vorteilhafte Drehung des Käfigläufers in der elektrischen Maschine zu erreichen, weist der Käfigläufer einen oder mehrere weitere Stäbe auf, wobei der Stab und der weitere bzw. die weiteren Stäbe sich vom axialen Ende des Läuferblechpakets zum weiteren axialen Ende des Läuferblechpakets erstrecken, und an dem axialen Ende durch den angegossenen Kurzschlussring elektrisch und mechanisch vorteilhaft in gleicher Weise wie der Stab mit dem angegossenen Kurzschlussring verbunden sind. An dem weitern axialen Ende des Läuferblechpakets sind der Stab und der weitere Stab bzw. weitere Stäbe entsprechend durch einen weiteren angegossenen Kurzschlussring vorteilhaft in gleicher Weise wie der Stab an dem Stabende mit dem angegossenen Kurzschlussring verbunden. Für eine Befestigung des Stabes, des weiteren Stabes oder der weiteren Stäbe kann sich das erste Material des angegossenen Kurzschlussrings durch die Nut zum weiteren angegossenen Kurzschlussring erstrecken.

Eine axiale Richtung ist eine Richtung parallel zur Drehachse, eine radiale Richtung ist eine Richtung senkrecht zur Drehachse. Entfernt man sich von der Drehachse in einer radialen Richtung, erreicht man zunächst den Nutgrund der Nut und dann den Stab, der in der Nut angeordnet ist.

Eine elektrische Maschine kann ein Gehäuse zum Schutz der elektrischen Maschine aufweisen, in dem der Stator angeordnet ist, und der Rotor zwischen dem Stator drehbar gelagert ist. Die drehbare Lagerung des Käfigläufers kann über die Welle durch Lager im Gehäuse erfolgen.

Eine erfindungsgemäße elektrische Maschine weist neben den bereits angeführten Vorteilen auch den weiteren Vorteil auf, dass neben dem hohen Wirkungsgrad der elektrischen Maschine die Lager zur Lagerung des Käfigläufers im Gehäuse eine geringeren Verschleiß aufweisen. Aufgrund der deformierbaren Lagerung des Stabes in der Nut kann eine exaktere Massenverteilung des Käfigläufers um die Drehachse erreicht werden, so dass der Käfigläufer eine geringere Unwucht aufweist. Der geringere Verschleiß der Lager verursacht geringere Reibungsverluste in den Lagern, so dass eine elektrische Maschinen mit hohem Wirkungsgrad zur Verfügung gestellt werden kann. Ein weiterer Vorteil des erfindungsgemäßen Läuferblechpakets besteht darin, dass das Läuferblechpaket die vorteilhafte deformierbare Lagerung aufweist. So kann bereits vor dem Angießen des Kurzschlussrings der Stab vorteilhaft im Läuferblechpaket gelagert werden.

Ein erfindungsgemäßes Verfahren zur Herstellung eines erfindungsgemäßen Läuferblechpakets weist auch den Vorteil auf, dass die Lagerungsvorrichtung vorteilhaft am Läuferblechpaket erzeugt wird. Unter anderem kann die Lagerungsvorrichtung vorteilhaft mit geringem Aufwand erzeugt werden.

Ein erfindungsgemäßes Verfahren zur Herstellung eines erfindungsgemäßen Käfigläufers weist auch den weiteren Vorteil auf, dass die deformierbare Lagerung zumindest teilweise vorteilhaft verformt wird. Unter anderem wird die deformierbare Lagerung beim Erstarren der Schmelze durch die wirkenden Kräfte schrittweise verformt, ohne die Herstellung des Käfigläufers zu behindern.

Vorteilhafte Ausgestaltungen der Erfindung sind in den abhängigen Ansprüchen angegeben.

So ist eine Ausgestaltung des erfindungsgemäßen Käfigläufers vorteilhaft, bei der die deformierbare Lagerung in einem axialen Abstand a von der Lagerungsvorrichtung mindestens eine weitere Lagerungsvorrichtung aufweist. Dadurch kann ein gleichmäßigerer Abstand des Stabes vom Nutgrund über eine axiale Länge des Läuferblechpakets vom axialen Ende bis zum weiteren axialen Ende erreicht werden. So wird ein hoher Wirkungsgrad bei einer erfindungsgemäßen elektrischen Maschine erreicht. Bei der Herstellung von mehreren erfindungsgemäßen Käfigläufern wird vorteilhaft ein Unterschied in den Wirkungsgraden verringert. Bei einer erfindungsgemäßen elektrischen Maschine wird die Lebensdauer der Lager im Gehäuse erhöht, da die Käfigläufer eine geringere Unwucht aufweisen. Bei einem erfindungsgemäßen Käfigläufer kann der axiale Abstand a eine Länge aufweisen, die durch einen Wert aus einem Wertebereich festgelegt ist. Der Wertebereich beginnt bei einem ersten Wert und endet mit einem zweiten Wert. Der erste Wert für den axialen Abstand a ist mindestens so groß, dass die Lagerungsvorrichtung ohne eine Einschränkung durch die weitere Lagerungsvorrichtung deformierbar ist. Bei einer Deformation der Lagerungsvorrichtung durch eine auf den Stab wirkende Kraft muss ein Material, das die Lagerungsvorrichtung aufweist, u.a. auch Möglichkeiten haben, um sich in axialer Richtung in der Nut zu verschieben. Die beim Erstarren der Schmelze aus dem ersten Material wirkenden Kräfte können je nach ihrer Verteilung über eine Hebelwirkung des Stabes auf die Lagerungsvorrichtung oder/und die weitere Lagerungsvorrichtung wirken. Dies kann nicht nur zu einer Transformation der Kräfte gemäß dem Hebelgesetz führen, sondern auch zu einem Verbiegen des Stabes. Das Verbiegen des Stabes führt dazu, dass der Stab einen größeren Raum in der Nut einnimmt als wenn er seine ursprüngliche der Nut in axialer Richtung angepassten Form beibehält. Den größere Raum kann man sich an einer Projektion der Querschnitte des Stabes in axialer Richtung verdeutlichen, wenn man diese mit einem einzelnen Querschnitt des Stabes in der Nut vergleicht. Man wird feststellen, dass bei einem verbogenen Stab eine radiale Ersteckung der Projektion größer ist als die radiale Erstreckung einen einzelnen Querschnitts des Stabes. Der zweite Wert des Wertebereichs ist daher dadurch festgelegt, dass der Stab in der Nut maximal eine Krümmung aufweist, die eine radiale Erstreckung des Stabes in der Nut, die man an einer Projektion der Querschnitte des Stabes in axialer Richtung ermittelt, nur in geringem Maße gegenüber einem einzelnen Quersschnitt des Stabes in der Nut vergrößert. Hierdurch kann entlang einer axialen Richtung des Läuferblechpakets in der Nut ein nahezu gleicher Abstand des Stabes vom Nutgrund erreicht werden und eine maximale Füllung der Nut mit dem Läuferstab und/oder dem ersten Material erreicht werden. Dies führt zu einem Käfigläufer bzw. einer elektrischen Maschine mit hohem Wirkungsgrad. Vorteilhaft ist die radiale Erstreckung des Stabes durch die Krümmung nicht größer als eine radiale Erstreckung des einzelnen Querschnitts des Stabes erhöht um den zweifachen Abstand des Stabes vom Nutgrund in einer Ebene senkrecht zur axialen Richtung, in der die deformierbare Lagerung die Lagerungsvorrichtung aufweist.

Bei einem erfindungsgemäßen Käfigläufer kann die Lagerungsvorrichtung in der Nähe des axialen Endes des Läuferblechpakets und die weitere Lagerungsvorrichtung in der Nähe des weiteren axialen Endes des Läuferblechpakets angeordnet sein. So kann ein Kippen des in der Nut angeordneten Stabs vor dem Angießen des Kurzschlussrings mit größerer Wahrscheinlichkeit vermieden werden und eine exaktere Massenverteilung des Käfigläufers um die Drehachse erreicht werden. So können vorteilhaft Läuferblechpakete und Käfigläufer hergestellt werden, mit denen elektrische Maschinen mit hohem Wirkungsgrad erreicht werden.

Bei einem erfindungsgemäßen Käfigläufer umfasst das Läuferblechpaket die Lagerungsvorrichtung an dem axialen Ende des Läuferblechpakets. Dies ermöglicht ein vorteilhaftes Anordnen des Stabes in der Nut. Unter anderem kann eine Lagerung des Stabs auf der Lagerungsvorrichtung der deformierbaren Lagerung durch eine Sichtprüfung vorteilhaft überprüft werden und leichter korrigiert werden. So werden elektrische Maschinen mit hohem Wirkungsgrad erreicht.

In einer weiteren vorteilhaften Ausgestaltung eines erfindungsgemäßen Käfigläufers weist die Lagerungsvorrichtung eine Lagerungseinheit auf, die einstückig mit dem Läuferblechpaket verbunden ist. Die Eigenschaften der Lagerungsvorrichtung der deformierbaren Lagerung sind so vorteilhaft definiert festgelegt. Die Lagerungsvorrichtung kann so vorteilhaft einstückig am Läuferblechpaket, insbesondere bei der Herstellung eines Läuferblechpakets, erzeugt werden. Es wird ein Käfigläufer für eine elektrische Maschine mit hohem Wirkungsgrad erreicht, da die Kräfte beim Erstarren der Schmelze des ersten Materials durch die festgelegten Eigenschaften der Lagerungsvorrichtung zu einer erwünschten Deformation der deformierbaren Lagerung führen. Unter anderem haben dadurch Fertigungsschwankungen beim Herstellen eines erfindungsgemäßen Läuferblechpakets und eines erfindungsgemäßen Käfigläufers geringe Auswirkungen auf den Wirkungsgrad einer elektrischen Maschine.

In einer weiteren vorteilhaften Ausgestaltung eines erfindungsgemäßen Käfigläufers umfasst das Läuferblechpaket ein erstes Blech, das die Lagerungseinheit aufweist. So können die Eigenschaften eines Bleches, aus dem das erste Blech und die Lagerungseinheit aus einem Stück hergestellt werden, in vorteilhafter Weise für eine deformierbare Lagerung zur Erreichung einer elektrischen Maschine mit hohem Wirkungsgrad genutzt werden. Unter anderem weisen Bleche eine vorteilhaft nutzbare dünne Dicke auf und können durch Verarbeitungsschritte, die beim Herstellen des Läuferblechpakets genutzt werden, mit einer hohen Maßhaltigkeit in eine passende Gestalt gebracht werden. Die passende Gestalt kann sehr exakt festgelegt werden, so dass die Lagerungseinheit den beim Erstarren der Schmelze aus dem ersten Material wirkenden Kräften mit einer definierten Gegenkraft entgegenwirkt, eine definierte Deformation der Lagerungseinheit erfolgt und der zeitliche Verlauf der Gegenkraft und der Deformation der Lagerungseinheit dem zeitlichen Verlauf der wirkenden Kräfte so angepasst ist, dass eine Verbindung zwischen dem ersten Material und dem Stab erreicht wird, die zu einem hohen Wirkungsgrad einer elektrischen Maschine führt.

Die Lagerungseinheit kann vorteilhaft beim Herstellen des ersten Bleches durch eine spanabhebende Bearbeitung des Bleches, z.B. durch Stanzen, am Blech erzeugt werden.

Ein erfindungsgemäßer Käfigläufer kann in der Nut ein Positionierelement aufweisen, das einstückig mit einem Blech des Läuferblechpakets verbunden ist. Das Positionierelement kann vorteilhaft mit der deformierbaren Lagerung zusammenwirken, um den Stab in einer definierten Lage vor und/oder während des Erstarrens der Schmelze aus dem ersten Material zu halten. So wird die Wirkung der deformierbaren Lagerung vorteilhaft unterstützt und eine elektrische Maschine mit hohem Wirkungsgrad zur Verfügung gestellt. Das Blech kann so mit dem Positionierelement aus einem Stück Blech hergestellt werden. Das Positionierelement kann vorteilhaft beim Herstellen des Bleches durch eine entsprechende spanabhebende Bearbeitung des Bleches am Blech erzeugt werden.

Bei einem erfindungsgemäßen Käfigläufer kann das erste Blech das Positionierelement aufweisen. So ist ein definiertes Zusammenwirken des Positionierelements mit der Lagerungseinheit vorteilhaft realisiert. Prozessschwankungen bei einer Herstellung des Läuferblechpakets oder des Käfigläufers haben geringe Auswirkung auf das Zusammenwirken des Positionierelements mit der Lagerungseinheit.

In einer weiteren vorteilhaften Ausgestaltung eines erfindungsgemäßen Käfigläufers umfasst das Läuferblechpaket mindestens ein weiteres Blech, das eine weitere Lagerungseinheit aufweist, wobei das weitere Blech in einer axialen Richtung benachbart zu dem ersten Blech angeordnet ist. Dadurch kann eine Steifheit der Lagerungsvorrichtung vorteilhaft eingestellt werden. Die weitere Lagerungseinheit kann die Gegenkraft der Lagerungseinheit verstärken. Dadurch, dass das weitere Blech in der axialen Richtung benachbart zum ersten Blech angeordnet ist, stützen sich die weitere Lagerungseinheit und die Lagerungseinheit gegenseitig, so dass ein anderer zeitlicher Verlauf der Deformation der Lagerungsvorrichtung eingestellt werden kann, der der beim Erstarren der Schmelze aus dem ersten Material wirkenden Kraft zeitlich vorteilhaft angepasst sein kann. So kann eine elektrische Maschine mit einem hohen Wirkungsgrad erreicht werden.

In einer weiteren vorteilhaften Ausgestaltung eines erfindungsgemäßen Käfigläufers ist die Lagerungsvorrichtung in einem Nutgrund der Nut vorhanden. Die Lagerungsvorrichtung kann so vorteilhaft der beim Erstarren der Schmelze aus dem ersten Material wirkenden Kraft, die insbesondere in einer radialen Richtung zur Drehachse hin wirkt, entgegenwirken. So wird vorteilhaft eine elektrische Maschine mit hohem Wirkungsgrad erreicht. Die Lagerungsvorrichtung kann in dem Nutgrund der Nut vorteilhaft klein ausgeführt werden. Unter anderem muß der Stab nur an einem Punkt der Lagerungsvorrichtung im Nutgrund der Nut gelagert sein. Die Nut kann durch die Lagerungsvorrichtung im Nutgrund der Nut mit einem größerer Querschnitt für die Wicklung, insbesondere für den Stab, und gegebenfalls für das erste Material in der Nut für einen niedrigen elektrischen Widerstand genutzt werden.

Bei einem erfindungsgemäßen Käfigläufer kann die Lagerungsvorrichtung in dem Nutgrund der Nut ein Drahtstück sein. Die Form des Drahts ermöglicht ein vorteilhaftes Anordnen des Drahts im Nutgrund der Nut und unter Berücksichtigung der Materialeigenschaften des Drahts eine vorteilhafte Ausgestaltung eine Lagerungsvorrichtung einer deformierbaren Lagerung. Beim Erstarren der Schmelze aus dem ersten Material wird durch die auf den Stab wirkenden Kräfte der Draht durch den Stab auseinandergequetscht, so dass der Stab der erstarrenden Schmelze aus dem ersten Material, insbesondere in einer radialen Richtung zur Drehachse hin, folgen kann. Somit wird eine gute Verbindung zwischen dem Stab und der erstarrenden Schmelze erreicht, was eine elektrische Maschine mit hohem Wirkungsgrad ermöglicht. Die Lagerung des Stabs kann auf einem Stück Draht oder mehreren gegebenenfalls in axialer Richtung hintereinander angeordneten Stücken eines Drahts erfolgen. Die Lagerungsvorrichtung kann so vorteilhaft durch ein Einlegen des Drahtes in die Nut, insbesondere bei der Herstellung eines Läuferblechpakets, erzeugt werden. Der Draht kann sich von dem axialen Ende des Läuferblechpakets bis zu dem weiteren axialen Ende des Läuferblechpakets erstrecken. Hierdurch kann der Stab vorteilhaft in nahezu gleichem Abstand vom Nutgrund der Nut von dem axialen Ende des Läuferblechpakets bis zu dem weiteren axialen Ende des Läuferblechpakets gelagert sein. Dies ermöglicht eine elektrische Maschine mit hohem Wirkungsgrad.

Durch eine geeignete Wahl des Materials des Drahts kann die Gegenkraft, die der Draht bewirkt, eingestellt sein. Vorteilhaft kann hier ein weiches Material ausgewählt werden, so dass eine geeignete Gegenkraft dem Stab ermöglicht, der erstarrenden Schmelze aus dem ersten Material zu folgen. Die Lagerungsvorrichtung kann so vorteilhaft durch eine Auswählen eines Drahtes aus einem weichen Material und dem Einlegen des Drahtes in die Nut, insbesondere bei der Herstellung eines Läuferblechpakets, erzeugt werden.

Der Draht kann vorteilhaft durch weitere Nuten des Läuferblechpakets geführt sein. Dies ermöglicht unter anderem eine einfache zeitsparende Herstellung des Läuferblechpakets bzw. des Käfigläufers.

In einer weiteren vorteilhaften Ausgestaltung eines erfindungsgemäßen Käfigläufers weist die Lagerungseinheit an zwei Seitenflächen, die die Nut in einer Umfangsrichtung begrenzen, jeweils mindestens eine Nase auf. Der Stab ist so vorteilhaft durch die deformierbare Lagerung in der Nut gelagert. Unter anderem ist der Nutgrund vorteilhaft frei. Wirken durch das Erstarren der Schmelze aus dem ersten Material Kräfte auf den Stab, so werden die Nasen deformiert und können gegebenenfalls durch die wirkenden Kräfte zur Seite gequetscht werden. Der Stab kann so vorteilhaft tiefer in einer radialen Richtung zur Drehachse hin in dem Nutgrund geführt werden. Eine Umfangsrichtung kann eine Richtung sein, in der der Käfigläufer die Drehbewegung um die Drehachse ausführen kann.

Bei einem erfindungsgemäßen Käfigläufer kann der Stab durch die deformierbare Lagerung aufgehängt gelagert sein, wobei die Lagerungsvorrichtung eine Aufhängevorrichtung umfasst. Hierdurch kann der Stab vorteilhaft genau in der Nut angeordnet werden und behält seine Position bei, auch wenn der Stab die Nut nicht komplett ausfüllt und das erste Material noch nicht in der Nut vorhanden ist. So wird eine elektrische Maschine mit hohem Wirkungsgrad erreicht.

Die Aufhängevorrichtung kann vorteilhaft durch die Nasen gebildet sein, die die Lagerungseinheit an zwei Seitenflächen, die die Nut in einer Umfangsrichtung begrenzen, jeweils aufweist. Es kann vorteilhaft auf ein Positionierelement verzichtet werden, wenn die Nasen den Stab auch vorteilhaft gegen eine Verschiebung, in einer radialen Richtung fixieren, die den Stab weiter vom Nutgrund entfernen würde. So kann der Querschnitt der Nut für die Wicklung, insbesondere für den Stab, und gegebenfalls für das erste Material in der Nut vorteilhaft genutzt werden.

Die oben beschriebenen Eigenschaften, Merkmale und Vorteile dieser Erfindung sowie die Art und Weise, wie diese erreicht werden, werden klarer und deutlicher verständlich im Zusammenhang mit der folgenden Beschreibung der Ausführungsbeispiele, die im Zusammenhang mit den Figuren näher erläutert werden. Es zeigen:
- FIG 1: ein erstes Ausführungsbeispiel einer elektrischen Maschine, die ein erstes Ausführungsbeispiel eines Käfigläufers umfasst,
- FIG 2: einen Ausschnitt eines Querschnitts entlang der Linie II-II der FIG 1,
- FIG 3: ein erstes Ausführungsbeispiel eines Läuferblechpakets,
- FIG 4: ein zweites Ausführungsbeispiel einer elektrischen Maschine, die ein zweites Ausführungsbeispiel eines Käfigläufers umfasst,
- FIG 5: ein Ausschnitt eines Querschnitts entlang der Linie V-V der FIG 4,
- FIG 6: ein zweites Ausführungsbeispiel eines Läuferblechpakets,
- FIG 7: ein Ausschnitt einer Ansicht des Läuferblechpakets gemäß FIG 6 in einer axialen Richtung gesehen,
- FIG 8: ein drittes Ausführungsbeispiel einer elektrischen Maschine, die ein drittes Ausführungsbeispiel eines Käfigläufers umfasst,
- FIG 9: ein Ausschnitt eines Querschnitts entlang der Linie IX-IX der FIG 8,
- FIG 10: ein drittes Ausführungsbeispiel eines Läuferblechpakets.

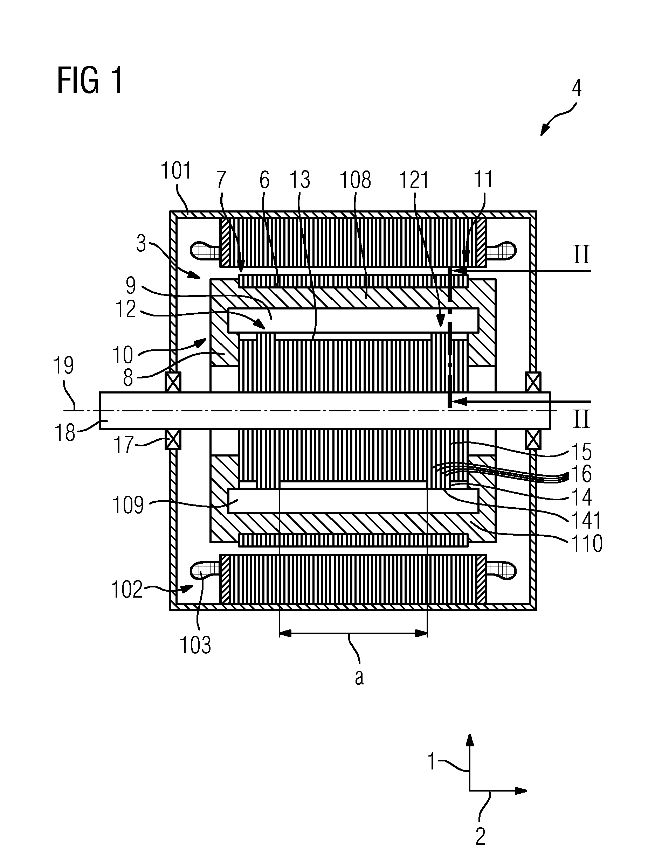

FIG 1 zeigt ein erstes Ausführungsbeispiel einer elektrischen Maschine 4, die ein erstes Ausführungsbeispiel eines Käfigläufers 3 umfasst. Die elektrische Maschine 4 ist eine Asynchronmaschine und weist ein Gehäuse 101 auf, in dem der Stator 102 angeordnet ist. Der Stator 102 weist eine Wicklung 103 auf. Der Käfigläufer 3 ist auf einer Welle 18 befestigt, die über Wälzlager 17 um die Drehachse 19 im Gehäuse 101 drehbar gelagert ist. Der Käfigläufer 3 umfasst ein Läuferblechpaket 5, das eine Nut 6 aufweist, ein an einem axialen Ende 7 des Läuferblechpakets 5 angegossener Kurzschlussring 8, der ein erstes Material 108 aufweist, und einen Stab 9, der in der Nut 6 angeordnet ist, und durch eine deformierbare Lagerung 10 in der Nut 6 gelagert ist. Die deformierbare Lagerung 10 weist eine Lagerungsvorrichtung 12 und eine weitere Lagerungsvorrichtung 121 auf. Der Käfigläufer weist die weitere Lagerungsvorrichtung 121 in einem axialen Abstand a von der Lagerungsvorrichtung 12 auf. Der Stab 9 ist durch die deformierbare Lagerung 10 in der Nut 6 von einem Nutgrund 13 entfernt gelagert. Eine Wicklung des Käfigläufers 3 weist dem Stab 9 einen weiteren Stab 109, den Kurzschlussring 8 und den weiteren Kurzschlussring 110 auf, sowie weitere Stäbe, die in weiteren Nuten des Käfigläufers 3 angeordnet sind. Entfernt man sich von der Drehachse 19 in einer radialen Richtung 1, kann man zunächst den Nutgrund 13 der Nut 6 erreichen und dann den Stab 9, der in der Nut 6 angeordnet ist. Die Lagerungsvorrichtung 12 sowie die weitere Lagerungsvorrichtung 121 weisen Lagerungseinheiten 14 auf, die einstückig mit dem Läuferblechpaket 5 verbunden sind. In der FIG 1 ist der Übersichtlichkeit halber nur eine Lagerungseinheit 14 und eine weitere Lagerungseinheit 141 einer weiteren deformierbaren Lagerung, durch die der weitere Stab 109 in einer weiteren Nut des Läuferblechpakets 5 gelagert ist, mit Bezugszeichen 14, 141 versehen. Das Läuferblechpaket 5 umfasst ein erstes Blech 15, das Lagerungseinheiten 14 in der Nut 6 und der weiteren Nut aufweist. Das Läuferblechpaket 5 umfasst weitere Bleche 16, die weitere Lagerungseinheiten 141 in der Nut 6 und der weiteren Nut aufweisen, wobei das weitere Blech in einer axialen Richtung 2 benachbart zum ersten Blech 15 angeordnet ist.

Das erste Blech 15 und die weiteren Bleche 16 weisen eine Dicke von 0,65 mm auf. Damit der Stab 9 der Schmelze des ersten Materials 8 beim Erstarren in erfindungsgemäßer Weise folgen kann, weisen die Lagerungsvorrichtungen 12, 121 jeweils fünf Lagerungseinheiten 14, 141 auf, die einstückig mit Blechen 15, 16 verbunden sind. Beim ersten Ausführungsbeispiel des Käfigläufers 3 weisen die Lagerungsvorrichtung 12 und die weitere Lagerungsvorrichtung 121 jeweils eine axiale Länge von 3,25 mm auf, wobei eine geschichtete Anordnung von Blechen, insbesondere des ersten Blechs 15 und der weiteren Bleche 16, als ideal ohne Zwischenräume zwischen den Blechen angenommen wird. Weiterhin weist das Läuferblechpaket 5 jeweils von dem axialen Ende 7 und dem weiteren axialen Ende 11 des Läuferblechpakets 5 beginnend zunächst vier geschichtete Bleche auf, die keine Lagerungseinheit 14, 141 aufweisen.

Das erste Material 108 ist Aluminium und wurde in einem Druckgussprozess an den Käfigläufer 3 angegossen. Der Stab 9 weist als Material Kupfer auf. Bei einem Erstarren der Schmelze des ersten Materials 108 nach oder während eines Angießens der Kurzschlussringe 8 mit Hilfe des Druckgussprozesses sind der Stab 9, der weitere Stab 109 und die weiteren Stäbe dem Schrumpfen des ersten Materials 108 gefolgt. Es sind zwischen dem Stab 9, dem weiteren Stab 109 und den weiteren Stäben und dem ersten Material 108, das den Stab 9, den weiteren Stab 109 und weiteren Stäbe umgibt, elektrisch und mechanisch vorteilhafte Verbindungen ausgebildet.

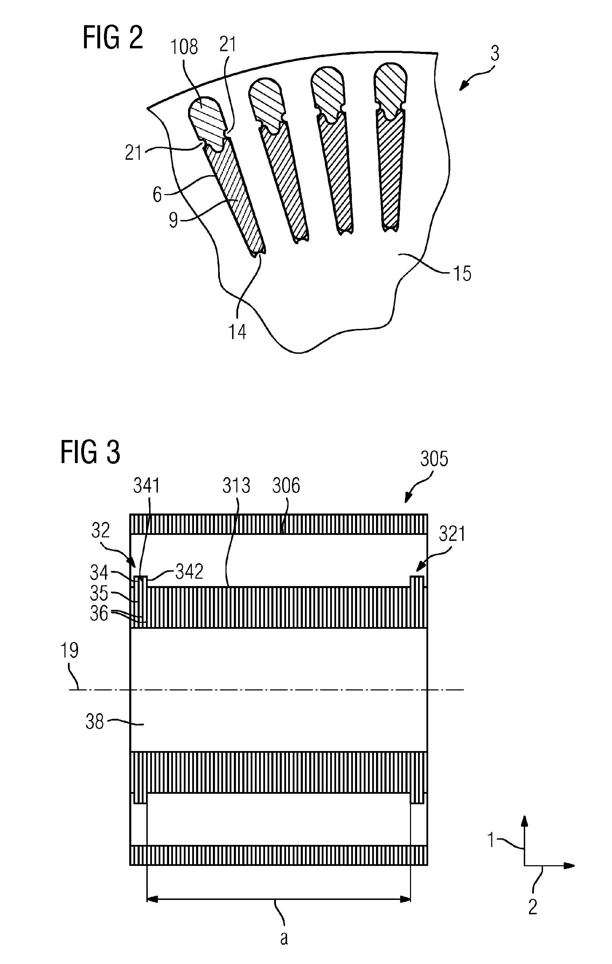

FIG 2 zeigt einen Ausschnitt eines Querschnitts des Käfigläufers 3 der FIG 1 entlang der Linie II-II. Neben den in FIG 1 gezeigten Elementen des Käfigläufers 3 sind in FIG 2 Positionierelemente 21 zu sehen. Außerdem ist zu sehen, dass die Lagerungseinheit 14 eine dornartige Form aufweist und einstückig mit dem ersten Blech 15 verbunden ist. Die dornartige Form ist eine Möglichkeit den Stab 9 nur an einem Punkt der Lagerungsvorrichtungen 12, 121 im Nutgrund 13 der Nut 6 zu lagern. Die weiteren Lagerungseinheiten 141 sind in gleicher Weise wie die Lagerungseinheit 14 ausgeführt. Die Kräfte, die beim Erstarren der Schmelze auf den Stab 9 wirken, haben zu einer Deformation der deformierbare Lagerung 10 geführt. Insbesondere wurde beim Erstarren der Schmelze des ersten Materials 108 der Stab 9 durch die wirkenden Kräfte in radialer Richtung 1 zur Welle 18 hin bewegt. Durch die wirkenden Kräfte wurden die Lagerungsvorrichtungen 12, 121 zumindest teilweise deformiert, insbesondere elastisch oder plastisch deformiert. Die Lagerungseinheit 14 oder die weiteren Lagerungseinheiten 141 können deshalb Quetschungen, Verformungen bzw. unterschiedliche Verformungen aufweisen. Bei einer elastischen Deformierung der Lagerungsvorrichtungen 12, 121 kann die Deformierung wieder rückgängig gemacht werden, wenn man z.B. durch teilweises Zerstören des Käfigläufers 3 die Kräfteverhältnisse im Käfigläufer 3 verändert.

FIG 3 zeigt ein erstes Ausführungsbeispiel eines Läuferblechpakets 305. Dieses Läuferblechpaket 305 umfasst eine Nut 306 und eine Lagerungsvorrichtung 32. Diese Lagerungsvorrichtung 32 ist in einem Nutgrund 313 der Nut 306 vorhanden. Die Lagerungsvorrichtung weist drei Lagerungseinheiten 34, 341, 342 auf, die einstückig mit dem Läuferblechpaket 305 verbunden sind. Dabei weist ein erstes Blech 35 eine Lagerungseinheit 34 der drei Lagerungseinheiten 34, 341, 342 auf. Ein weiteres Blech 36 des Läuferblechpakets 305 weist die weitere Lagerungseinheit 341 auf, wobei das weitere Blech 36 in der axialen Richtung 2 benachbart zum ersten Blech 35 angeordnet ist. Eine deformierbare Lagerung 30 des Läuferblechpakets 305 weist die Lagerungsvorrichtung 32 und in einem axialen Abstand a von der Lagerungsvorrichtung 32 eine weitere Lagerungsvorrichtung 321 auf, die entsprechend der Lagerungsvorrichtung 32 ausgebildet ist. Das Läuferblechpaket 305 weist eine Öffnung 38 für eine Welle auf. Die Bleche des Läuferblechpakets 305, die das erste Blech 35 und das weitere Blech 36 umfassen, sind in der axialen Richtung 2 geschichtet angeordnet. Die Lagervorrichtung 32 wurde am Läuferblechpaket 305 erzeugt, indem die Bleche 35, 36 so ausgestanzt wurden, dass die Lagerungseinheiten 34, 341, 342 jeweils einstückig mit einem der Bleche 35, 36 verbunden sind und die geschichtete Anordnung durch Stanzpaketieren erreicht wurde. Das Läuferblechpaket 305 ist für eine Drehung um eine Drehachse 19, die in axialer Richtung 2 verläuft, symmetrisch zur Drehachse 19 ausgebildet.

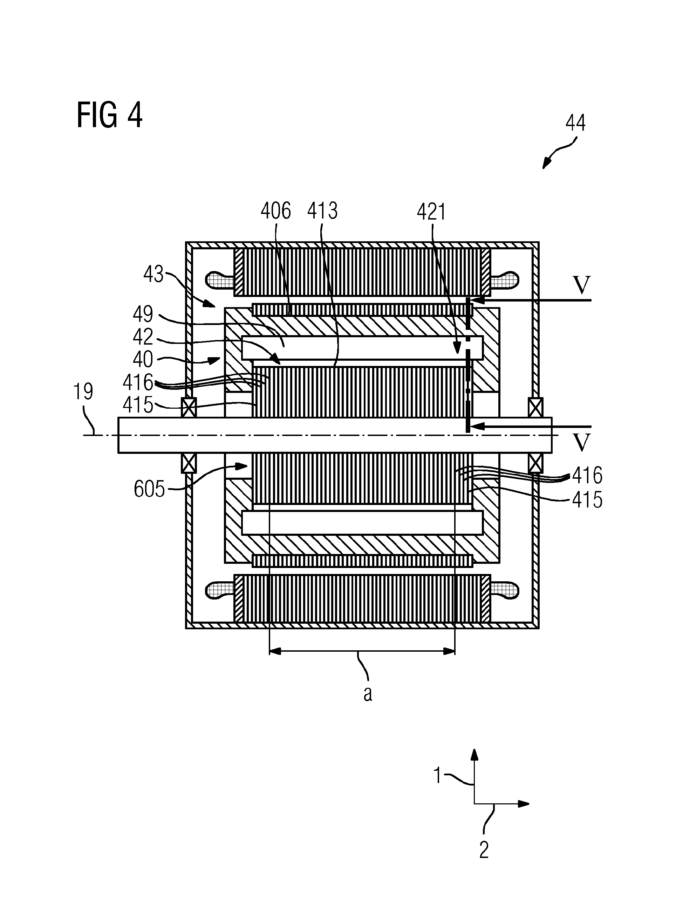

FIG 4 zeigt ein zweites Ausführungsbeispiel einer elektrischen Maschine 44, die ein zweites Ausführungsbeispiel eines Käfigläufers 43 umfasst. Der Käfigläufer 43 umfasst ein Läuferblechpaket 605, das eine Nut 406 aufweist und einen Stab 49, der in der Nut 406 angeordnet ist und durch eine deformierbare Lagerung 40 in der Nut 406 gelagert ist. Die deformierbare Lagerung 40 weist eine Lagerungsvorrichtung 42 und in einem axialen Abstand a von der Lagerungsvorrichtung 42 eine weitere Lagerungsvorrichtung 421 auf.

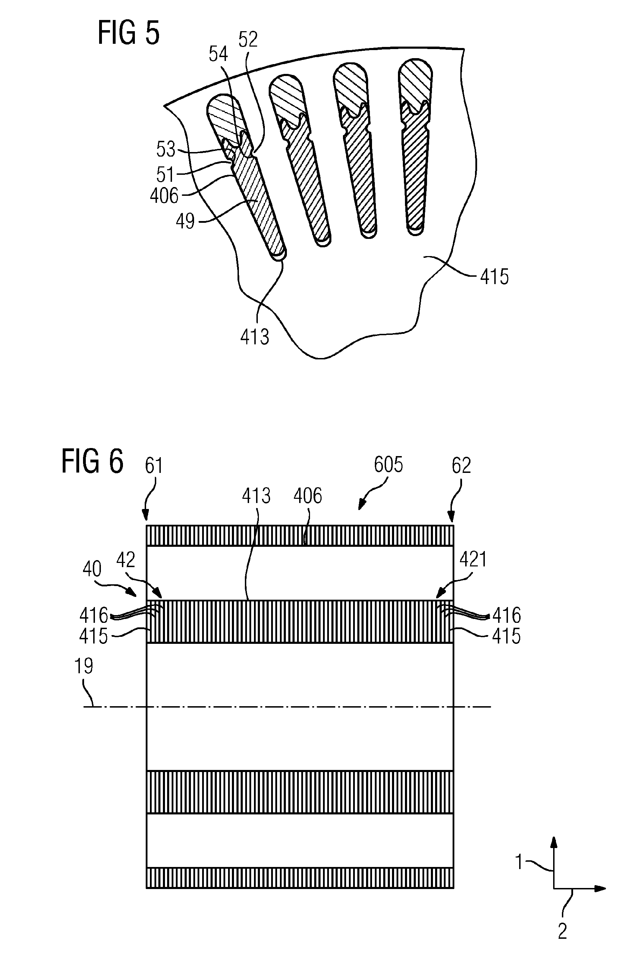

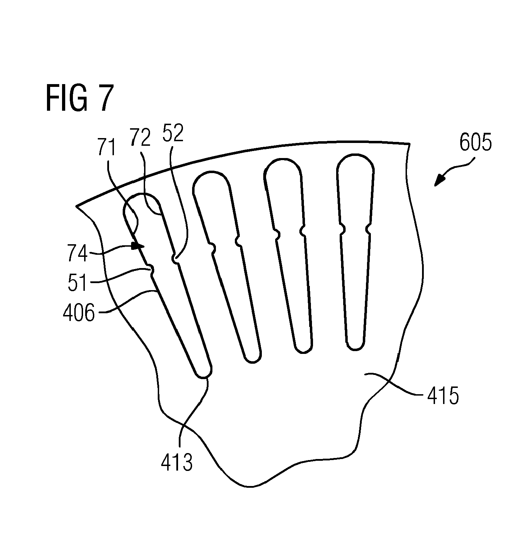

FIG 5 verdeutlicht, dass beim zweiten Ausführungsbeispiel gemäß FIG 4 die Nasen 51,52 eine Aufhängevorrichtung bilden, mit denen der Stab 49 in der Nut aufgehängt ist. Die Nasen 51, 52 wirken mit Ausbuchtungen 53, 54 an Seitenflächen des Stabs 49 zusammen, so dass die Nasen 51, 52 auch als Positionierelemente dienen. Die Seitenflächen des Stabs 49 sind die Flächen, die bei dem in der Nut 406 angeordneten Stab 49 den zwei Seitenflächen 71, 72 (siehe FIG 7), die die Nut 406 in einer Umfangsrichtung begrenzen, benachbart sind.

FIG 6 zeigt ein zweites Ausführungsbeispiel eines Läuferblechpakets 605.

FIG 7 zeigt einen Ausschnitt einer Ansicht des Läuferblechpakets 605 gemäß der FIG 6 in einer axialen Richtung 2 gesehen. Die FIG 6 und 7 zeigen das Läuferblechpaket 605, das der Käfigläufer 43 gemäß einem zweiten Ausführungsbeispiel wie in FIG 4 gezeigt umfasst. Die deformierbare Lagerung 40 weist eine Lagerungsvorrichtung 42 und in einem axialen Abstand a von der Lagerungsvorrichtung 42 eine weitere Lagerungsvorrichtung 421 auf, wie sie u.a. in FIG 4 gezeigt ist. Die Lagerungsvorrichtung 42 und die weitere Lagerungsvorrichtung 421 weisen Lagerungseinheiten 74 auf, die in FIG 7 an einem ersten Blech 415 des Läuferblechpakets 605 gezeigt werden. Die Lagerungseinheit 74 weist an zwei Seitenflächen 71, 72, die die Nut 406 in einer Umfangsrichtung begrenzen, jeweils eine Nase 51,52 auf. Das Läuferblechpaket 605 umfasst weitere Bleche 416, die jeweils weitere Lagerungseinheiten aufweisen, die in ihrer Ausführung der Lagerungseinheit 74 gemäß FIG 7 entsprechen und in axialer Richtung 2 benachbart zu dem ersten Blech 415 angeordnet sind. Das Läuferblechpaket 605 beginnt an einem axialen Ende 61 mit dem ersten Blech 415 und endet an einem weiteren axialen Ende 62 mit einem Blech, das in der Ausführung dem des ersten Blechs 415 mit einer Lagerungseinheit 74 gemäß FIG 7 entspricht. So umfasst das Läuferblechpaket 605 die Lagerungsvorrichtung 42 und die weitere Lagerungsvorrichtung 421 an dem axialen Ende 61 bzw. an dem weiten axialen Ende 62 des Läuferblechpakets 605.

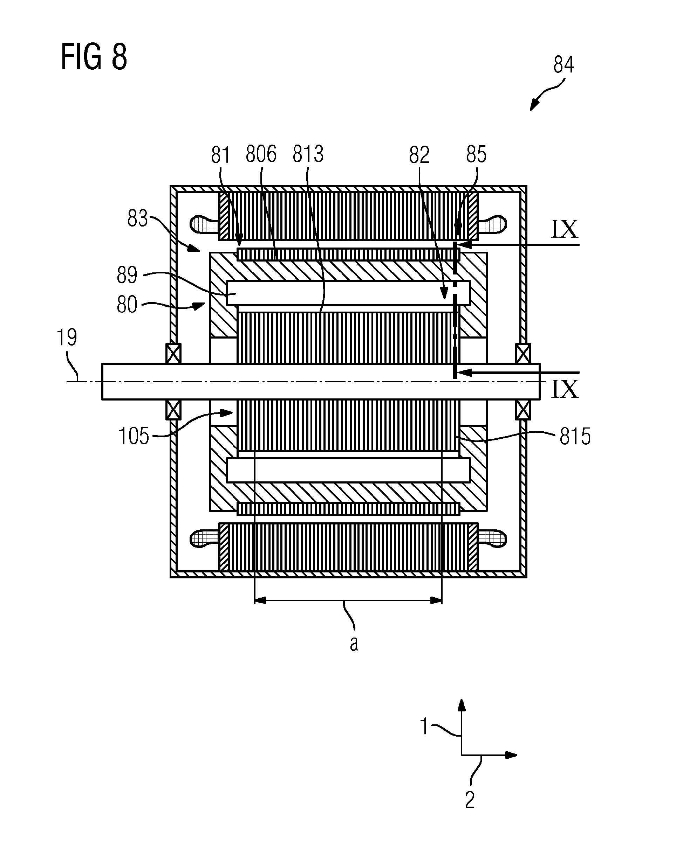

FIG 8 zeigt ein drittes Ausführungsbeispiel einer elektrischen Maschine 84, die ein drittes Ausführungsbeispiel eines Käfigläufers 83 umfasst. Der Käfigläufer 83 umfasst ein Läuferblechpaket 105, das eine Nut 806 aufweist und einen Stab 89, der in der Nut 806 angeordnet ist und durch eine deformierbare Lagerung 80, die eine Lagerungsvorrichtung 82 aufweist, in der Nut 806 gelagert ist. Das Läuferblechpaket 105 umfasst Bleche 815, die in einer axialen Richtung 2 geschichtet angeordnet sind. Die Lagerungsvorrichtung 82 ist in einem Nutgrund 813 der Nut 806 vorhanden. Die Lagerungsvorrichtung 82 ist ein Draht, der als Material Aluminium aufweist und von einem axialen Ende 81 des Läuferblechpakets 105 zu einem weiteren axialen Ende 85 des Läuferblechpakets 105 verläuft. Aufgrund des Aluminiums ist der Draht als Lagerungsvorrichtung 82 weich und kann durch die bei einem Erstarren der Schmelze aus dem ersten Material 108 wirkende Kräfte auseinandergequetscht werden. So kann der Stab 89 dem Schrumpfen der Schmelze aus dem ersten Material 108 beim Erstarren in einer radialer Richtung 1 zur Welle 18 folgen, um eine Verbindung zwischen dem Stab 89 und den Kurzschlussringen mit niedrigem elektrischen Widerstand zu erreichen.

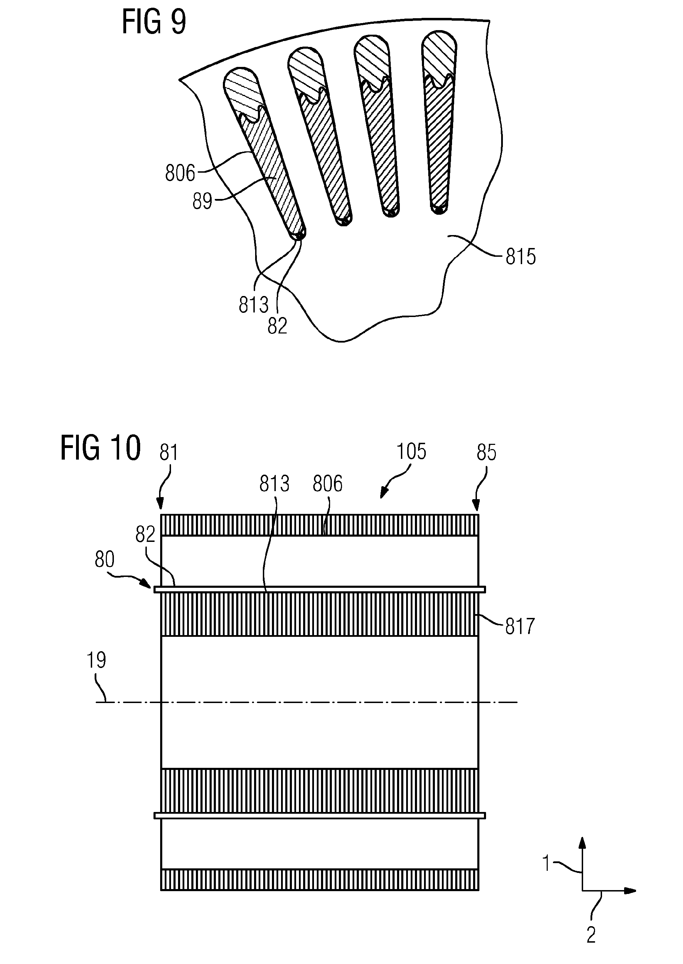

FIG 9 zeigt einen Ausschnitt des dritten Ausführungsbeispiels eines Käfigläufers 83 gemäß FIG 8 entlang der Linie IX-IX.

FIG 10 zeigt ein drittes Ausführungsbeispiel eines Läuferblechpakets 105, welches dem Läuferblechpaket entspricht, das das dritte Ausführungsbeispiel eines Käfigläufers 83 gemäß FIG 8 umfasst. Das Läuferblechpaket 105 umfasst die Nut 806 und die Lagervorrichtung 82. Damit die Lagerungsvorrichtung 82 vor einem Einlegen eines Stabs in die Nut 806 im Nutgrund 813 erzeugt ist und vorhanden ist, kann der Draht, der die Lagerungsvorrichtung 82 ist, durch weitere Nuten des Läuferblechpakets 105 geführt sein. Hierzu wird der Draht vom axialen Ende 81 des Läuferblechpakets 105 in einer axialen Richtung 2 durch die Nut 806 zum weiteren axialen Ende 85 des Läuferblechpakets 105 geführt. Am weiteren axialen Ende 85 ist der Draht entlang eines letzten Blechs 817 des Läuferblechpakets 105 zu einer weiteren Nut geführt. In der weiteren Nut ist der Draht vom weiteren axialen Ende 85 des Läuferblechpakets 105 zum axialen Ende 81 des Läuferblechpakets 105 geführt.

Obwohl die Erfindung im Detail durch bevorzugte Ausführungsbeispiele näher illustriert und beschrieben wurde, ist die Erfindung nicht durch die offenbarten Beispiele eingeschränkt und andere Variationen können vom Fachmann hieraus abgeleitet werden, ohne den Schutzumfang der Erfindung zu verlassen. Unter anderem sind noch weitere Ausführungsbeispiele denkbar, bei denen die Lagerungsvorrichtung ein Wellblech oder Federn, insbesondere Stahlfedern, oder einen Federstahl umfasst.

## Patentansprüche

1. Käfigläufer (3, 43, 83) für eine elektrische Maschine (4, 44, 84) umfassend
- ein Läuferblechpaket (5, 305, 605, 105), das eine Nut (6, 306, 406, 806) aufweist,
- ein an einem axialen Ende (7, 11, 61, 62, 81, 85) des Läuferblechpakets (5, 305, 605, 105) angegossener Kurzschlussring (8, 110), der ein erstes Material (108) aufweist, und
- einen Stab (9, 49, 89), der in der Nut (6, 306, 406, 806) angeordnet ist,
**dadurch gekennzeichnet, dass** der Stab (9, 49, 89) durch eine deformierbare Lagerung (10, 30, 40, 80), die eine Lagerungsvorrichtung (12, 32, 42, 82) aufweist, in der Nut (6, 306, 406, 806) gelagert ist.

2. Käfigläufer (3, 43) nach Anspruch 1, wobei die Lagerungsvorrichtung (12, 32, 42, 82) eine Lagerungseinheit (14, 34, 74) aufweist, die einstückig mit dem Läuferblechpaket (5, 305, 605) verbunden ist.

3. Käfigläufer (3, 43) nach Anspruch 2, wobei das Läuferblechpaket (5, 305, 605) ein erstes Blech (15, 35, 415) umfasst, das die Lagerungseinheit (14, 34, 74) aufweist.

4. Käfigläufer (3, 43) nach Anspruch 3, wobei das Läuferblechpaket (5, 305, 605) mindestens ein weiteres Blech (16, 36, 416) umfasst, das eine weitere Lagerungseinheit (141, 341, 342) aufweist, wobei das weitere Blech (16, 36, 416) in einer axialen Richtung (2) benachbart zu dem ersten Blech (15, 35, 415) angeordnet ist.

5. Käfigläufer (3, 83) nach einem der vorhergehenden Ansprüche, wobei die Lagerungsvorrichtung (12, 32, 42, 82) in einem Nutgrund (13, 313, 413, 813) der Nut (6, 306, 806) vorhanden ist.

6. Käfigläufer (43) nach einem der Ansprüche 2 bis 4, wobei die Lagerungseinheit (74) an zwei Seitenflächen (71, 72), die die Nut (406) in einer Umfangsrichtung begrenzen, jeweils mindestens eine Nase (51, 52) aufweist.

7. Läuferblechpaket (5, 305, 605, 105) für einen Käfigläufer (3, 43, 83) nach einem der vorhergehenden Ansprüche, wobei das Läuferblechpaket (5, 305, 605, 105) die Nut (6, 306, 406, 806) und die Lagervorrichtung (12, 32, 42, 82) umfasst.

8. Elektrische Maschine (4, 44, 84) umfassend einen Käfigläufer (3, 43, 83) nach einem der Ansprüche 1 bis 6.

9. Verfahren zur Herstellung eines Läuferblechpakets (5, 305, 605, 105) nach Anspruch 7, wobei die Lagervorrichtung (12, 32, 42, 82) am Läuferblechpaket (5, 305, 605, 105) erzeugt wird.

10. Verfahren zur Herstellung eines Käfigläufers (3, 43, 83) nach einem der Ansprüche 1 bis 6, wobei der Stab (9, 49, 89) durch eine deformierbare Lagerung (10, 30, 40, 80), die eine Lagerungsvorrichtung (12, 32, 42, 82) aufweist, in der Nut (6, 306, 406, 806) gelagert wird.
